# EUROPEAN PATENT APPLICATION

(11) **EP 1 895 222 A1**
(43) Date of publication of application: **05.03.2008**
(21) Application number: 07397030.3
(22) Date of filing: 03.09.2007
(51) Int. Cl.: F16L 21/06, F16L 21/08

(54) **Method and apparatus for coupling a removable fluid conduit to an existing fluid conduit**

(30) Priority: 01.09.2006 US 514765
(71) Applicant: Banjo Corporation, Crawfordsville, IN 47933 (US)
(72) Inventor: Reid, Aaron, Lebanon, IN 46052 (US)
(74) Representative: Hovi, Simo Pekka Tapani

(57) **Abstract**

A clamp member (170) for coupling a removable fluid conduit (120) to a fluid conduit (100) is disclosed. The removable fluid conduit (120) may include a first interactive member (154) for interaction with a second interactive member (172) of the clamp member (170) to couple the removable fluid component (120) to the clamp member (170). The clamp member (170) may include one or more gripping members (180) to engage an exterior surface of the fluid conduit (100).

## Description

### BACKGROUND OF THE INVENTION

### Field of the Invention

The present invention relates generally to the coupling of a removable fluid conduit to an existing fluid conduit. More particularly, the present invention relates to the coupling of a removable fluid conduit to an existing fluid conduit without the requirement of cutting threads into the existing fluid conduit or permanently affixing the removable fluid conduit to the existing fluid conduit.

### Related Art

Traditionally a removable fluid conduit, such as a fitting, has been attached to an existing fluid conduit, such as a pipe, through one of three ways: welding the fitting to the pipe, gluing the fitting to the pipe, or cutting threads on the pipe to interface with threads on the fitting.

### SUMMARY OF THE INVENTION

In an exemplary embodiment of the present invention, a removable fluid conduit is provided that is secured to an existing fluid conduit through at least one removable clamp member. In one example, the at least one removable clamp member includes one or more gripping members. In a further exemplary embodiment of the present invention, at least one removable clamp member is provided to secure two fluid conduits together. In one example, the at least one removable clamp member includes one or more gripping members.

In another exemplary embodiment of the present invention, an apparatus for coupling to an existing fluid conduit having an unthreaded exterior surface and a fluid passageway is provided. The apparatus comprises a removable fluid conduit including a body portion having a fluid passageway. The apparatus further comprises a removable clamp member including a body portion having a first portion configured to couple the removable fluid conduit and a second portion including a plurality of gripping members to engage the exterior surface of the existing fluid conduit. The plurality of gripping members are positioned in at least three quadrants about the unthreaded exterior surface of the existing fluid conduit.

In yet a further exemplary embodiment of the present invention, an apparatus for coupling to an existing fluid conduit having an unthreaded exterior surface and a fluid passageway is provided. The apparatus comprises a removable fluid conduit including a body portion having a fluid passageway. The removable fluid conduit further includes a first interactive member. The apparatus further comprises a removable clamp member including a body portion having a second interactive member configured to engage the first interactive member of the removable fluid conduit and a plurality of gripping members to engage the unthreaded exterior surface of the existing fluid conduit. One of the first interactive member of the removable fluid conduit and the second interactive member of the removable clamp member includes a recess to receive the other of the first interactive member of the removable fluid conduit and the second interactive member of the removable clamp member.

In yet still a further exemplary embodiment of the present invention, a method of establishing fluid communication between a first fluid conduit having an unthreaded exterior surface and a second fluid conduit is provided. The method comprises the steps of providing a removable fluid conduit having a first end, a second end, and a fluid passageway there through; positioning the first end of the removable fluid conduit adjacent a first end of the of the first fluid conduit; and securing the removable fluid conduit to the first fluid conduit through a clamp member. The clamp member includes a body portion having a first portion configured to engage the removable fluid conduit and a second portion having a plurality of gripping members to engage the unthreaded exterior surface of the first fluid conduit. The method further comprises the step of coupling the second fluid conduit to the removable fluid conduit. The removable fluid conduit has a recess proximate to the second end of the removable fluid conduit which cooperates with the second fluid conduit to retain the second fluid conduit.

In yet another exemplary embodiment of the present invention, an apparatus for coupling a removable fluid conduit including a body portion having a fluid passageway to an existing fluid conduit having an unthreaded exterior surface and a fluid passageway is provided. The apparatus comprises a removable clamp member including a body portion having a first portion configured to couple the removable fluid conduit and a second portion including a plurality of gripping members to engage the exterior surface of the existing fluid conduit. The plurality of gripping members are positioned in at least three quadrants about the unthreaded exterior surface of the existing fluid conduit.

Additional features of the present invention will become apparent to those skilled in the art upon consideration of the following detailed description of the presently perceived best mode of carrying out the invention.

### BRIEF DESCRIPTION OF THE DRAWINGS

The detailed description of the drawings particularly refers to the accompanying figures in which:

Fig. 1 is a sectional view of a removable fluid conduit secured to an existing fluid conduit by a clamp device having a plurality of gripping members;

Fig. 2 is a perspective view of the clamp device of Fig. 1 illustrating two clamp members;

Fig. 3 is a sectional view of the two clamp members of Fig. 2 along lines 3-3 of Fig. 2;

Fig. 4 is a detail view of a portion of Fig. 3 illustrating the plurality of gripping members;

Fig. 5 is an exploded, assembly view of the components of Fig. 1;

Fig. 6 is a sectional view of a removable fluid conduit secured to an existing fluid conduit by a clamp device having a plurality of gripping members;

Fig. 7 is a perspective view of the clamp device of Fig. 6 illustrating two clamp members;

Fig. 8 is a sectional view of the two clamp members of Fig. 7 along lines 8-8 of Fig. 7;

Fig. 9 is a detail view of a portion of Fig. 8 illustrating the plurality of gripping members; and

Fig. 10 is an exploded, assembly view of the components of Fig. 6.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention in several forms and such exemplification is not to be construed as limiting the scope of the invention in any manner.

### DETAILED DESCRIPTION OF THE EMBODIMENTS

The embodiments discussed below are not intended to be exhaustive or limit the invention to the precise forms disclosed in the following detailed description. Rather, the embodiments are chosen and described so that others skilled in the art may utilize their teachings.

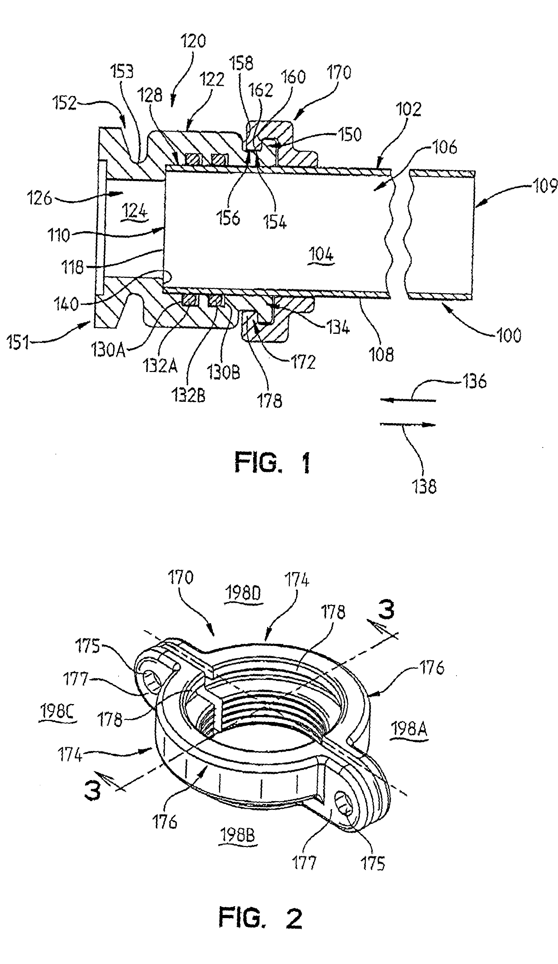

Referring to Fig. 1, existing fluid conduit 100 is shown. Existing fluid conduit 100 is illustrated as a pipe. Existing fluid conduit 100 includes a generally cylindrical body portion 102 having exterior surface 108 and interior surface 104 defining fluid passage 106. Existing fluid conduit 100 includes first end 109 and second end 110. Exterior surface 108 proximate to second end 110 is not threaded.

Also shown in Fig. 1, is removable fluid conduit 120 having body portion 122. Body portion 122 includes a generally cylindrical interior surface 124 defining fluid passage 126. Further, body portion 122 includes enlarged portion 128 having two recesses 130A,B for receiving a pair of seals 132A,B.

Enlarged portion 128 is sized to receive body portion 102 of existing fluid conduit 100. Body portion 102 of existing fluid conduit 100 is Introduced into first end 134 of removable fluid conduit 120 and is advanced generally in direction 136 by either moving existing fluid conduit 100 in direction 136 or by advancing removable fluid conduit 120 generally in direction 138. End surface 118 of existing fluid conduit 100 abuts against stop surface 140 of removable fluid conduit 120 to limit the advancement of existing fluid conduit 100 into removable fluid conduit 120.

As discussed in more detail below, first portion 150 of removable fluid conduit 120 is configured to cooperate with one or more clamp members 170 to couple removable fluid conduit 120 to existing fluid conduit 100. Second portion 152 of removable fluid conduit 120 proximate second end 151 of removable fluid conduit 120, in one embodiment, is configured to cooperate with a second fluid conduit (not shown). Exemplary second fluid conduits include one of a plurality of line fittings (not shown) such as valves, line strainers, plugs, crosses, cam lever couplers, hose barbs, male and female pipe thread, couplings, reducers, tees, and dry disconnects which are available from Banjo Corporation located at 150 Banjo Drive in Crawfordsville, Indiana and designed to cooperate with second portion 152 to couple the respective line fitting to removable fluid conduit 120.

In the illustrated embodiment wherein removable fluid conduit 120 includes second portion 152 having circumferential recess 153, a second fluid conduit is coupled to removable fluid conduit 120 using a gasket and a v-band clamp. The second fluid conduit also contains a recess similar to recess 153 proximate an end to be coupled to removable fluid conduit 120. To assemble the second fluid conduit to removable fluid conduit 120, the gasket is placed in between the end faces of removable fluid conduit 120 and the second conduit. Further, the v-band clamp is placed around the connection. The v-band clamp includes a first portion that is received by recess 153 of removable fluid conduit 120 and a second portion that is received by the corresponding recess of the second fluid conduit. The v-band clamp is tightened to secure the second fluid conduit to removable fluid conduit 120.

As illustrated second portion 152 includes circumferential recess 153. Second portion 152 may have various other configurations as opposed to the illustrated configuration, including male threads, female threads, male or female cam lever couplings, I-line fitting, and Tri-clamp fitting, and other suitable configurations.

First portion 150 of removable fluid conduit 120 includes first interactive member 154. The illustrated first interactive member 154 includes recess 156 having first side wall 158, second side wall 160, and lower surface 162. As shown in Fig. 1 and explained in more detail herein, first interactive member 154 cooperates with second interactive member 172 of clamp member 170 to secure removable fluid conduit 120 relative to existing fluid conduit 100.

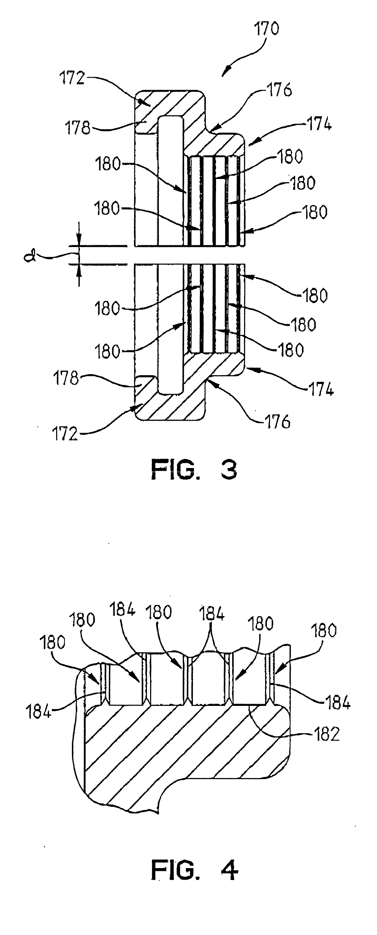

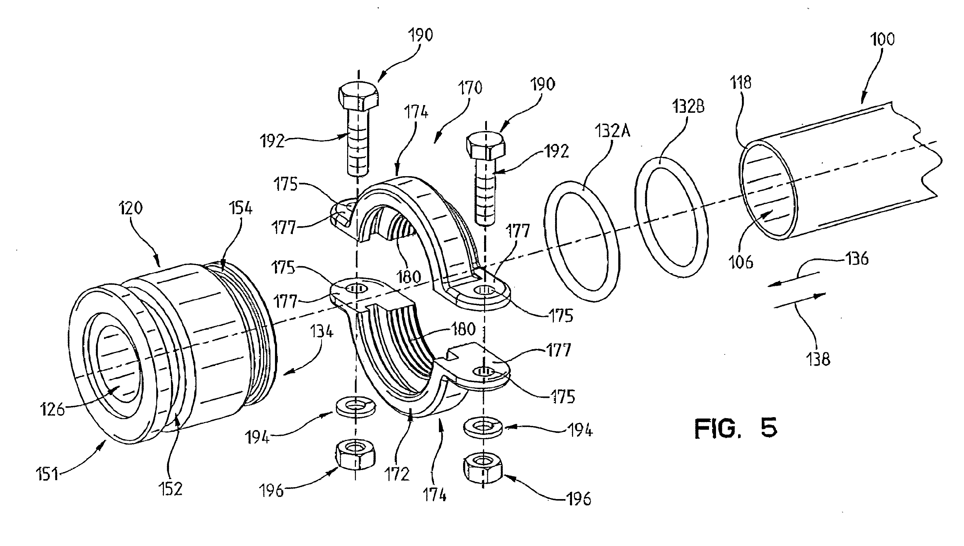

Referring to Figs. 2 and 3, clamp member 170 includes two clamp components 174. In the illustrated embodiment, clamp components 174 are identical. Clamp component 174 includes body portion 176 The two clamp components 174 are coupled together with a pair of couplers 190. As illustrated In Fig. 5, couplers 190 each includes bolt member 192 which passes through a respective opening 175 provided in flange 177 of each of clamp components 174. Couplers 190 each further include corresponding lock washer 194 and corresponding nut 196.

Referring to Fig. 3, body portion 176, in the illustrated embodiment, includes interactive member 172. Interactive member 172, in the illustrated embodiment includes protrusion 178. Protrusion 178 of interactive member 172 is received in recess 156 of interactive member 154 of fluid conduit 120. When assembled as shown in Fig. 1, interactive members 156 and 172 cooperate to restrain the movement of one of removable fluid conduit 120 and clamp member 170 relative to the other of removable fluid conduit 120 and clamp member 170. As illustrated, interactive members 156 and 172 are interlocking members. In one embodiment, interactive member 156 includes a protrusion and interactive member 172 includes a recess.

Referring to Fig. 4, each of clamp components 174 includes a plurality of gripping members 180 which protrude from an interior surface 182 of clamp component 174. Gripping members 180 each includes top portion 184 which has a diameter generally equal to a diameter of exterior surface 108 of fluid conduit 100. As best shown in Fig. 3, clamp members are generally separated by a gap "d" prior to being tightened closer together by couplers 190. As such, top portion 184 of gripping members 180 contact exterior surface 108 when clamp components are positioned around fluid conduit 100 and penetrate and/or exert increased force on exterior surface 108 of fluid conduit 108 as clamp components 174 are brought closer by couplers 190.

In one embodiment, gripping members 180 are generally triangular shaped. In one example, gripping members 180 have the shape of a right triangle. In another example, gripping members 180 have the shape of an equilateral triangle. Other suitable shapes for gripping members 180 include, but not limited to, half round, square, and rectangular. In one embodiment, gripping members 180 protrude from surface 182 a distance of about 0.015 inches.

Referring to Fig. 2, in the illustrated embodiment, gripping members 180 are provided in each of four quadrants 198A-198D of clamp member 170. As illustrated, gripping members 180 are continuous along surface 182 through two quadrants of respective clamp component 174 of clamp member 170, such as 198A and 198D of the top clamp component 174. In one embodiment, gripping members 180 are not continuous between quadrants and/or within a given quadrant. Gripping members 180 are illustrated in longitudinally spaced rows. In one embodiment, gripping members 180 are not disposed in longitudinally spaced rows.

Referring to Fig. 5, removable fluid conduit 120 and fluid conduit 100 are coupled together as follows. Seals 132 are positioned in recesses 130 in removable fluid conduit 120. Removable fluid conduit 120 is advanced in direction 138 relative to fluid conduit 100. In one embodiment, removable fluid conduit 120 is advanced in direction 138 relative to fluid conduit 100 until end surface 118 of fluid conduit 100 abuts against surface 140 of removable fluid conduit 120.

Clamp components 174 are located around fluid conduit 100 and removable fluid conduit 120 such that the respective interactive member 172 of each clamp component 174 interacts with the interactive member 154 of removable fluid conduit 120. Clamp components 174 are coupled together with couplers 190. As couplers 190 are tightened to hold clamp components 174 together, top portion 184 of gripping members 180 interact with exterior surface 108 of fluid conduit 100 to restrain the movement of clamp member 170 in directions 136, 138 relative to fluid conduit 100. As discussed above, the interaction between interactive members 154 and 172 restrains the movement of removable fluid conduit 120 in directions 136, 138 relative to clamp member 170 and hence relative to fluid conduit 100.

By having gripping members 180 disposed about the circumference of exterior surface 108, gripping members 180 provide a more uniform gripping of exterior surface 108. In one embodiment, gripping members 180 are disposed about the circumference of exterior surface 108 in at least three quadrants. In one embodiment, gripping members 180 are disposed about the circumference of exterior surface 108 in all four quadrants.

Prior to couplers 190 being tightened, clamp member 170 is in an unclamped position wherein removable fluid conduit 120 is moveable relative to existing fluid conduit 100 in directions 136 and 138. Once couplers 190 have been tightened, clamp member 170 is in a clamped position wherein removable fluid conduit 120 is not moveable in directions 136 and 138 relative to existing fluid conduit 100. As discussed above, a second fluid conduit may be coupled to second end 151 of removable fluid conduit 120 through second portion 152.

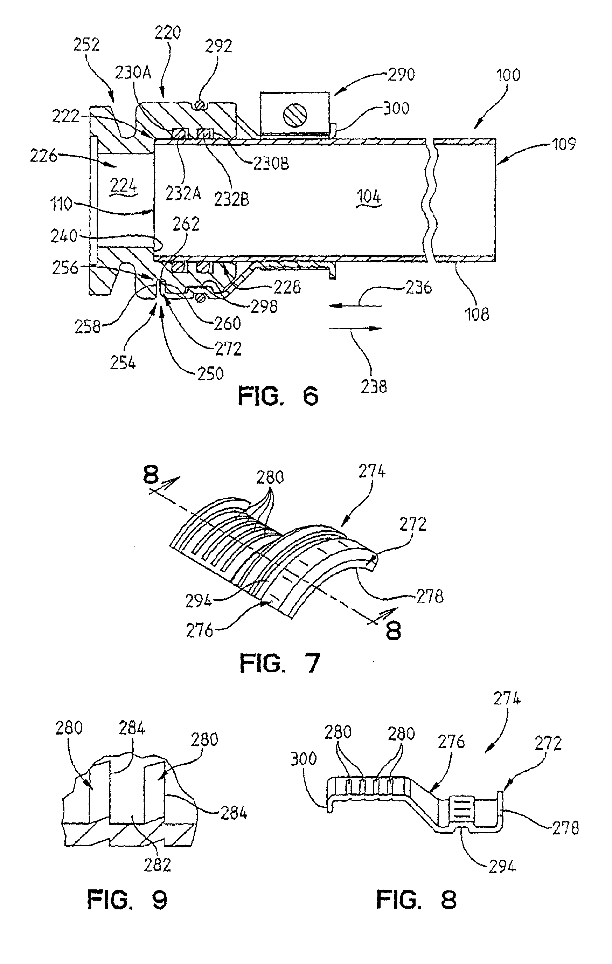

Referring to Fig. 6, removable fluid conduit 220 having body portion 222 is shown. Removable fluid conduit 220, like removable fluid conduit 120, is configured to be coupled to second end 110 of an existing fluid conduit 100 which does not have a threaded exterior surface 108.

Body portion 222 includes a generally cylindrical interior surface 224 defining fluid passage 226. Further, body portion 222 includes enlarged portion 228 having two recesses 230A,B for receiving a pair of seals 232A,B.

Enlarged portion 228 is sized to receive body portion 102 of existing fluid conduit 100. Body portion 102 of existing fluid conduit 100 is introduced into first end 234 of removable fluid conduit 220 and is advanced generally in direction 236 by either moving existing fluid conduit 100 in direction 236 or by advancing removable fluid conduit 220 generally in direction 238. End surface 118 of existing fluid conduit 100 abuts against stop surface 240 of removable fluid conduit 220 to limit the advancement of existing fluid conduit 100 into removable fluid conduit 220.

As discussed in more detail below, first portion 250 of removable fluid conduit 220 is configured to cooperate with one or more clamp members 270 to couple removable fluid conduit 220 to existing fluid conduit 100. Second portion 252 of removable fluid conduit 220, like second portion 152 of first removable fluid conduit 120, is configured to cooperate with a second fluid conduit (not shown), such as one of a plurality of line fittings available from Banjo Corporation.

First portion 250 of removable fluid conduit 220 includes first interactive member 254. The illustrated first interactive member 254 includes recess 256 having first side wall 258, second side wall 260, and lower surface 262. As shown in Fig. 6 and explained in more detail herein, first interactive member 254 cooperates with second interactive member 272 of clamp member 270 to secure removable fluid conduit 220 relative to existing fluid conduit 100.

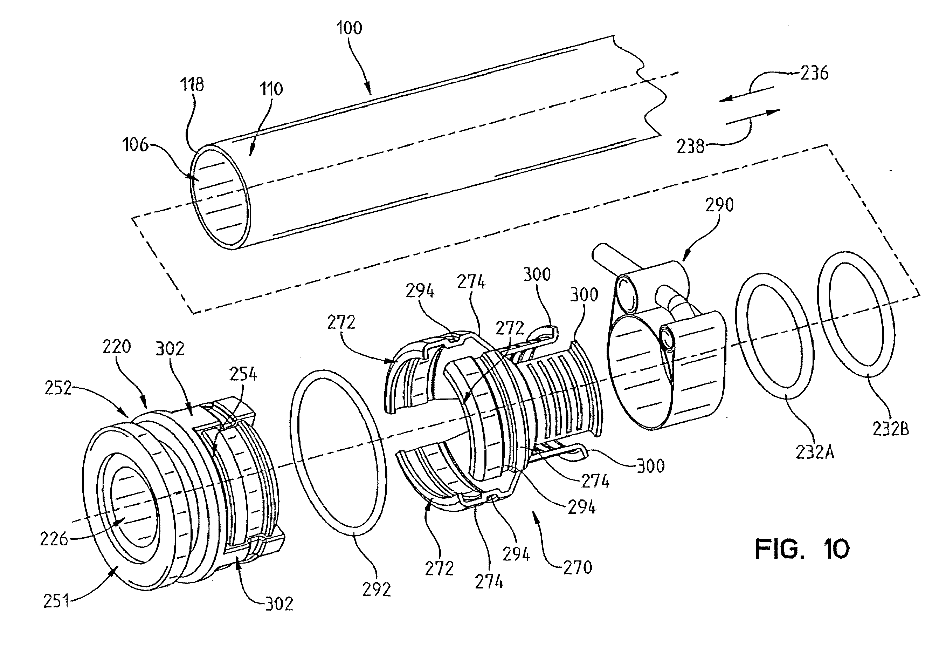

Referring to Fig. 10, clamp member 270 includes multiple clamp components 274. In the illustrated embodiment, clamp components 274 are identical. Referring to Fig. 7, clamp component 274 includes body portion 276. Clamp components 274 are coupled together with coupler 290 as shown in Fig. 6. As illustrated in Fig. 10, coupler 290 is a T-bolt clamp. Other suitable couplers 290 include a band clamp.

Returning to Figs. 7 and 8, body portion 276, in the illustrated embodiment, includes interactive member 272. Interactive member 272, in the illustrated embodiment includes protrusion 278. Protrusion 278 of interactive member 272 is received in recess 256 of interactive member 254 of fluid conduit 220. When assembled as shown in Fig. 6, interactive members 256 and 272 cooperate to restrain the movement of one of removable fluid conduit 220 and clamp member 270 relative to the other of removable fluid conduit 220 and clamp member 270. As illustrated, interactive members 256 and 272 are interlocking members.

Body portion 276 further includes recess 294 to receive a coupler, illustratively elastic band 292. Band 292 holds clamp components 274 together. On an inner surface of body portion 276 is provided second protrusion 296 opposite recess 294. Protrusion 296 is received in recess 298 in body portion 222 of removable fluid conduit 220. In one embodiment, recess 298 and protrusion 296 are first interactive member 254 and second interactive member 272, respectively, and protrusion 278 and recess 256 are not provided.

Referring to Fig. 9, each of clamp components 274 include a plurality of gripping members 280 which protrude from interior surface 282 of clamp component 274. Gripping members 280 each includes top portion 284 which has a diameter generally equal to a diameter of unthreaded exterior surface 108 of fluid conduit 100. As such, top portion 284 of gripping members 280 contact exterior surface 108 when clamp components are positioned around fluid conduit 100 and penetrate and/or exert increased force on exterior surface 108 of fluid conduit 100 as clamp components 274 are brought closer by coupler 290. Lip 300 is provided on clamp component 274 to limit the movement of coupler 290 in directions 236 and 238 relative to clamp component 274.

In one embodiment, gripping members 280 are generally triangular shaped. In one example, gripping members 280 have the shape of a right triangle. In another example, gripping members 280 have the shape of an equilateral triangle. Other suitable shapes for gripping members 280 include, but not limited to, half round, square, and rectangular. In one embodiment, gripping members 280 protrude from surface 282 a distance of about 0.020 inches.

As shown in Fig. 8 and Fig. 9, body portion 276 of claim component 274 has a generally constant wall thickness throughout. In one embodiment clamp component 274 is stamped from stainless steel. In one embodiment clamp component 274 is molded from a thermoplastic material. In one embodiment, clamp component 274 has a radial extent of about 90°.

Referring to Fig. 10, in the illustrated embodiment, gripping members 280 are provided on three instances of clamp member 274 which generally surround existing fluid conduit 100. As such, clamp member 270, like clamp member 170, includes gripping members 280 in at least three quadrants surrounding existing fluid conduit 100. As illustrated, gripping members 280 are continuous along surface 282 of clamp component 274. In one embodiment, gripping members 280 are not continuous along surface 282. Gripping members 280 are illustrated in longitudinally spaced rows. In one embodiment, gripping members 280 are not disposed in longitudinally spaced rows.

By having gripping members 280 disposed about the circumference of exterior surface 108, gripping members 280 provide a more uniform gripping of exterior surface 108. In one embodiment, gripping members 280 are disposed about the circumference of exterior surface 108 in at least three quadrants. In one embodiment, gripping members 280 are disposed about the circumference of exterior surface 108 in all four quadrants.

Removable fluid conduit 220 and fluid conduit 100 are coupled together as follows. Seals 232 are positioned In recesses 230 in removable fluid conduit 220. Removable fluid conduit 220 is advanced in direction 238 relative to fluid conduit 100. In one embodiment, removable fluid conduit 220 is advanced in direction 238 relative to fluid conduit 100 until end surface 118 of fluid conduit 100 abuts against surface 240 of removable fluid conduit 220.

Clamp components 274 are located around existing fluid conduit 100 and removable fluid conduit 220 such that the respective interactive member 272 of each clamp component 274 interacts with the interactive member 254 of removable fluid conduit 220. As shown in Fig. 10, removable fluid conduit 220 includes locators 302 which bound interactive member 254 to position the removable clamp components 274 about a circumference of the removable fluid conduit 220. Clamp components 274 are further held in place relative to removable fluid conduit by band 292 which is received by recess 298 of clamp components 274

Clamp components 274 are coupled to existing fluid conduit 100 with coupler 290. As coupler 290 is tightened to hold clamp components 274 together, top portion 284 of gripping members 280 interact with exterior surface 108 of fluid conduit 100 to restrain the movement of clamp member 272 in directions 136, 138 relative to fluid conduit 100. As discussed above, the interaction between interactive members 254 and 272 restrains the movement of removable fluid conduit 220 in directions 136, 138 relative to clamp member 272 and hence relative to fluid conduit 100.

Prior to coupler 290 being tightened, clamp member 270 is in an unclamped position wherein removable fluid conduit 220 is moveable relative to existing fluid conduit 100 in directions 236 and 238. Once coupler 290 has been tightened, clamp member 270 is in a clamped position wherein removable fluid conduit 220 is not moveable in directions 236 and 238 relative to existing fluid conduit 100. As discussed above, a second fluid conduit may be coupled to second end 251 of removable fluid conduit 220 through second portion 252.

In one embodiment, both first end 134 and second end 151 of removable fluid conduit 120 and the first end and second end of removable fluid conduit 220 are configured to interact with a respective clamp member 170 or clamp member 270.

In the illustrated embodiment, removable fluid conduit 120 and removable fluid conduit 220 are each a straight cylindrical fluid conduit having two connection ends. In other embodiments, removable fluid conduit 120 and 220 has other cross-sectional shapes, such as oval, and other configurations, such as angled. In addition, removable fluid conduit 120 and 220 each may contain any number of connection ends, each of which may be configured to interact with clamp member 170 or clamp member 270 or other coupling. In one example, removable fluid conduit 120 and 220 are a T-fitting having two connection ends along a first fluid path and a third connection end along a second fluid path intersecting with the first fluid path. In another example, removable fluid conduit 120 and 220 are each a cross fitting having two connection ends along a first fluid path and a third connection end and a fourth connection end along a second fluid path intersecting with the first fluid path.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. An apparatus for coupling to an existing fluid conduit having an unthreaded exterior surface and a fluid passageway, the apparatus comprising:
a removable fluid conduit including a body portion having a fluid passageway;
a removable clamp member including a body portion having a first portion configured to couple the removable fluid conduit and a second portion including a plurality of gripping members to engage the exterior surface of the existing fluid conduit, wherein the plurality of gripping members are positioned in at least three quadrants about the unthreaded exterior surface of the existing fluid conduit.

2. The apparatus of claim 1, wherein the removable clamp member includes a plurality of clamp components, each of the clamp components having a first portion configured to couple the removable fluid conduit and a second portion including a plurality of gripping members to engage the exterior surface of the existing fluid conduit.

3. The apparatus of claim 2, wherein the plurality of clamp components substantially circumscribe the exterior surface of the existing fluid conduit.

4. The apparatus of claim 2, wherein the plurality of gripping members of each of the plurality of clamp components Include a plurality of longitudinally spaced ribs.

5. The apparatus of claim 4, wherein a top portion of each of the plurality of longitudinally spaced ribs has a diameter generally equal to a diameter of the unthreaded exterior surface of the existing fluid conduit.

6. The apparatus of claim 5, wherein each of the plurality of longitudinally spaced ribs has a generally triangular profile.

7. The apparatus of claim 6, wherein each of the plurality of longitudinally spaced ribs has a generally equilateral triangular profile.

8. The apparatus of claim 1, further comprising at least one coupler, wherein the removable clamp member is moveable between a clamped position wherein the first portion of the removable clamp member is coupled to the removable fluid conduit and the plurality of gripping members of the second portion are held in engagement with the unthreaded exterior surface of the existing fluid conduit by the at least one coupler to limit the movement of the removable fluid conduit relative to the existing fluid conduit and an unclamped position wherein the plurality of gripping members are not held in engagement with the unthreaded exterior surface of the existing fluid conduit by the at least one coupler.

9. The apparatus of claim 1, wherein the removable fluid conduit has a straight fluid passageway.

10. The apparatus of claim 1, wherein the removable fluid conduit has an angled fluid passageway.

11. The apparatus of claim 1, wherein the removable fluid conduit has a T-configuration having a first fluid passageway having a first connection end and a second connection end and a second fluid passageway intersecting with the first fluid passageway and having a third connection end, the removable clamp member being coupled to one of the first connection end, the second connection end, and the third connection end of the removable fluid conduit.

12. The apparatus of claim 1, wherein the removable fluid conduit has a cross-configuration having a first fluid passageway having a first connection end and a second connection end and a second fluid passageway intersecting with the first fluid passageway and having a third connection end and a fourth connection end, the removable clamp member being coupled to one of the first connection end, the second connection end, the third connection end, and the fourth connection end of the removable fluid conduit.

13. An apparatus for coupling to an existing fluid conduit having an unthreaded exterior surface and a fluid passageway, the apparatus comprising:
a removable fluid conduit including a body portion having a fluid passageway, the removable fluid conduit further including a first interactive member;
a removable clamp member including a body portion having a second interactive member configured to engage the first interactive member of the removable fluid conduit and a plurality of gripping members to engage the unthreaded exterior surface of the existing fluid conduit, wherein one of the first interactive member of the removable fluid conduit and the second interactive member of the removable clamp member includes a recess to receive the other of the first interactive member of the removable fluid conduit and the second interactive member of the removable clamp member.

14. The apparatus of claim 13, wherein the removable clamp member is moveable from a first position spaced apart from the removable fluid conduit and a second position wherein the second interactive member of the removable fluid conduit is engaged with the first interactive member of the removable fluid conduit.

15. The apparatus of claim 14, wherein the removable fluid conduit includes a locator which positions the removable clamp member about a circumference of the removable fluid conduit.

16. The apparatus of claim 13, wherein the removable clamp member includes a plurality of clamp components, each of the clamp components having a first portion including the second interactive member and a second portion including the plurality of gripping members to engage the unthreaded exterior surface of the existing fluid conduit.

17. The apparatus of claim 16, wherein the plurality of clamp components substantially circumscribe the unthreaded exterior surface of the existing fluid conduit.

18. The apparatus of claim 16, wherein the plurality of gripping members of each of the plurality of clamp components include a plurality of longitudinally spaced ribs.

19. The apparatus of claim 18, wherein a top portion of each of the plurality of longitudinally spaced ribs has a diameter generally equal to a diameter of the unthreaded exterior surface of the existing fluid conduit.

20. The apparatus of claim 18, wherein each of the plurality of longitudinally spaced ribs has a generally triangular profile.

21. The apparatus of claim 13, further comprising at least one coupler, wherein the removable clamp member is moveable between a clamped position wherein the second interactive member of the removable clamp member is engaged with the first interactive member of the removable fluid conduit and the plurality of gripping members of the removable clamp member are held in engagement with the unthreaded exterior surface of the existing fluid conduit by the at least one coupler to limit the movement of the removable fluid conduit relative to the existing fluid conduit and an unclamped position wherein the plurality of gripping members are not held in engagement with the unthreaded exterior surface of the existing fluid conduit by the at least one coupler.

22. A method of establishing fluid communication between a first fluid conduit having an unthreaded exterior surface and a second fluid conduit, the method comprising the steps of:
providing a removable fluid conduit having a first end, a second end, and a fluid passageway there through;
positioning the first end of the removable fluid conduit adjacent a first end of the of the first fluid conduit;
securing the removable fluid conduit to the first fluid conduit through a clamp member, the clamp member including a body portion having a first portion configured to engage the removable fluid conduit and a second portion having a plurality of gripping members to engage the unthreaded exterior surface of the first fluid conduit; and
coupling the second fluid conduit to the removable fluid conduit, the removable fluid conduit having a recess proximate to the second end of the removable fluid conduit which cooperates with the second fluid conduit to retain the second fluid conduit.

23. The method of claim 22, wherein the gripping members of the clamp member substantially circumscribes the first fluid conduit.

24. The method of claim 22, wherein the step of securing the removable fluid conduit to the existing fluid conduit through a clamp member includes the steps of:
positioning a first clamp component over a first portion of the removable fluid conduit and a first portion of the first fluid conduit, the first clamp component including a first portion configured to engage the removable fluid conduit and a second portion having a plurality of gripping members to engage the unthreaded exterior surface of the first fluid conduit;
positioning a second clamp component over a second portion of the removable fluid conduit and a second portion of the first fluid conduit, the second clamp component including a first portion configured to engage the removable fluid conduit and a second portion having a plurality of gripping members to engage the unthreaded exterior surface of the first fluid conduit; and
holding the plurality of gripping members of the first clamp component and the second clamp component in engagement with the unthreaded exterior surface of the first fluid conduit with at least one coupler.

25. An apparatus for coupling a removable fluid conduit including a body portion having a fluid passageway to an existing fluid conduit having an unthreaded exterior surface and a fluid passageway, the apparatus comprising:
a removable clamp member including a body portion having a first portion configured to couple the removable fluid conduit and a second portion including a plurality of gripping members to engage the exterior surface of the existing fluid conduit, wherein the plurality of gripping members are positioned in at least three quadrants about the unthreaded exterior surface of the existing fluid conduit.

26. The apparatus of claim 25, wherein the removable clamp member includes a plurality of clamp components, each of the clamp components having a first portion configured to couple the removable fluid conduit and a second portion including a plurality of gripping members to engage the exterior surface of the existing fluid conduit.

27. The apparatus of claim 26, wherein the plurality of clamp components substantially circumscribe the exterior surface of the existing fluid conduit.

28. The apparatus of claim 26, wherein the plurality of gripping members of each of the plurality of clamp components include a plurality of longitudinally spaced ribs.

29. The apparatus of claim 28, wherein a top portion of each of the plurality of longitudinally spaced ribs has a diameter generally equal to a diameter of the unthreaded exterior surface of the existing fluid conduit.

30. The apparatus of claim 29, wherein each of the plurality of longitudinally spaced ribs has a generally triangular profile.

31. The apparatus of claim 30, wherein each of the plurality of longitudinally spaced ribs has a generally equilateral triangular profile.

32. The apparatus of claim 25, further comprising at least one coupler, wherein the removable clamp member is moveable between a clamped position wherein the first portion of the removable clamp member is coupled to the removable fluid conduit and the plurality of gripping members of the second portion are held in engagement with the unthreaded exterior surface of the existing fluid conduit by the at least one coupler to limit the movement of the removable fluid conduit relative to the existing fluid conduit and an unclamped position wherein the plurality of gripping members are not held in engagement with the unthreaded exterior surface of the existing fluid conduit by the at least one coupler.
